(19) Europäisches Patentamt
European Patent Office
Office européen des brevets

(11) **EP 4 057 132 B1**

(12) **EUROPEAN PATENT SPECIFICATION**

(45) Date of publication and mention
of the grant of the patent:
**14.08.2024   Bulletin 2024/33**

(21) Application number: **21211636.2**

(22) Date of filing: **01.12.2021**

(51) International Patent Classification (IPC):
***G06F 7/544*** (2006.01)

(52) Cooperative Patent Classification (CPC):
**G06F 7/5443**

(54) **OPTIMIZATION APPARATUS, OPTIMIZATION PROGRAM, AND OPTIMIZATION METHOD**

OPTIMIERUNGSVORRICHTUNG, OPTIMIERUNGSPROGRAMM UND
OPTIMIERUNGSVERFAHREN

APPAREIL D'OPTIMISATION, PROGRAMME D'OPTIMISATION ET PROCÉDÉ D'OPTIMISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.03.2021   JP 2021036691**

(43) Date of publication of application:
**14.09.2022   Bulletin 2022/37**

(73) Proprietor: **FUJITSU LIMITED
Kawasaki-shi, Kanagawa 211-8588 (JP)**

(72) Inventors:
• **Konoshima, Makiko**
**Kawasaki-shi, Kanagawa, 211-8588 (JP)**
• **Tamura, Hirotaka**
**Yokohama-shi, Kanagawa, 223-0066 (JP)**

(74) Representative: **Hoffmann Eitle
Patent- und Rechtsanwälte PartmbB
Arabellastraße 30
81925 München (DE)**

(56) References cited:
**EP-A1- 3 786 815        US-A1- 2017 364 477
US-A1- 2022 012 306**

• **BOROS ENDRE ET AL: "On Quadratization of
Pseudo-Boolean Functions", 25 April 2014
(2014-04-25), XP055919665, Retrieved from the
Internet
<URL:https://www3.cs.uic.edu/pub/Isaim2012/W
ebPreferences/ISAIM2012_Boolean_Boros_Gru
ber.pdf> [retrieved on 20220510]**

**Description**

[Technical Field]

The embodiments discussed herein are related to an optimization apparatus, an optimization program, and an optimization method.

[Background Art]

Information processing is performed in various fields in currently society. Such information processing is performed by arithmetic apparatuses such as computers, which perform operations and reorganization on various data and obtain meaningful results to perform prediction, determination, control, and the like. Optimization processing is one approach of this information processing and has become an important field.

One approach of the optimization processing is to solve a discrete optimization problem. In a large-scale multivariable discrete optimization problem, the number of combinations increases explosively, and the calculation time sometimes does not fall within a realistic range in the technique of exhaustively performing calculations to work out all combinations.

Examples of a method for solving such a large-scale multivariable discrete optimization problem include simulated annealing (SA) using an Ising-type energy function. In this SA, calculation is performed by replacing a problem to be calculated with an Ising model, which is a model representing behavior of spins of a magnetic material.

In the optimization calculation using the Ising model, bits are stochastically inverted to calculate an energy change in a case where one bit is inverted, and whether or not to accept the bit inversion according to the energy change is adopted, thereby searching for an optimum solution that minimizes the energy.

PTL 5 relates to an information processing apparatus, an Ising device, and an information processing apparatus control method, in particular relates to a proposal for mapping an optimization problem using high-order energy functions without using an ancillary bit.

[Citation List]

[Patent Literature]

   [PTL 1] Japanese Laid-open Patent Publication No. 2019-145010
   [PTL 2] Japanese Laid-open Patent Publication No. 2019-46038
   [PTL 3] International Publication Pamphlet No. WO 2015/190593
   [PTL 4] U.S. Patent Application Publication No. 2019/0087388
   [PTL 5] US 2017/0364477 A1

[Summary]

[Technical Problem]

However, the related art described above has a problem that, in a case of searching for a minimum value of an energy function E(x) including a higher-order term of a third-order or higher, the number of parameter elements to be transferred from a memory to a computational resource becomes enormous.

For example, an example of describing the energy function E(x) related to all orders, where k represents an order, is as expressed by the following formula (1), where a k-th order coupling coefficient represents a k-th order array $W_{1,2,\ldots,k}$. The coupling coefficient represents the strength of mutual coupling of each of a plurality of spins in the Ising model in which each of a plurality of variables is regarded as each of the plurality of spins of a magnetic material.

[Math. 1]

$$E(x) = -\sum_{k=0}^{K} \sum_{j_1,\cdots,j_k} W_{j_1,\cdots j_k} x_{j_1} \cdots x_{j_k} \qquad \cdots (1)$$

Here, $j_1...j_k$ represent the element position in each order, and x represents a binary (0, 1) or a spin (1, -1). W represents an array different for each order, which is generally a multidimensional array.

The formula (1) is rewritten as the following formula (2). ZK represents a coupling coefficient of the k-th order term, which is K-dimensional array.

[Math. 2]

$$E = -\sum_{k=3}^{K} \sum_{<j_1\cdots j_k>} ZK_{<j_1\cdots j_k>} x_{j_1} \cdots x_{j_k} - \sum_{<ij>} V_{ij} x_i x_j - \sum_{i} U_i x_i + E_0 \qquad \cdots (2)$$

Here, a formula (3), which is a calculating formula of an energy change ΔEk (x, i) of the K-th order term associated with inversion of the i-th element of x, and a formula (4), which is a total calculating formula, are as follows. Note that E0 disappears as it is a change.

[Math. 3]

$$\Delta EK(x,i) = \sum_{j2,...,jk=1}^{N} ZK_{i,j2,...,jk} x_{j1} ... x_{jk} + \sum_{j1,...,i-1,i+1,...,jk=1}^{N} ZK_{j1,...,i,...,jk} x_{j1} ... x_{jk}$$
$$+ \sum_{j1,...,ji-1=1}^{N} ZK_{j1,...,jk} x_{j1} ... x_{jk} \qquad \cdots (3)$$

[Math. 4]

$$\Delta E(x,i) = \Delta EK(x,i) + \cdots + \Delta E1(x,i) \qquad \cdots (4)$$

For example, in the third-order term, $x'_{j1}x'_{j2}x'_{j3}$ obtained by inverting $x_{j1}x_{j2}x_{j3}$ by 1 bit is calculated. Accordingly, when the inverted part is set as m and a bit difference is set as $\Delta x_m$, the third-order term is the sum of calculated $Z_{m,j2,j3}\Delta x_m x_{j2} x_{j3}$, $Z_{j1,m,j3} x_{j1}\Delta x_m x_{j3}$, and $Z_{j1,j2,m} x_{j1} x_{j2}\Delta x_m$.

That is, for example, the amount of memory access to perform calculation needs the hyperplane of Z by the number of orders. A case of a fourth-order or higher applies in a similar manner. The values of K × N^(K - 1) elements are transferred from the memory to the computational resource.

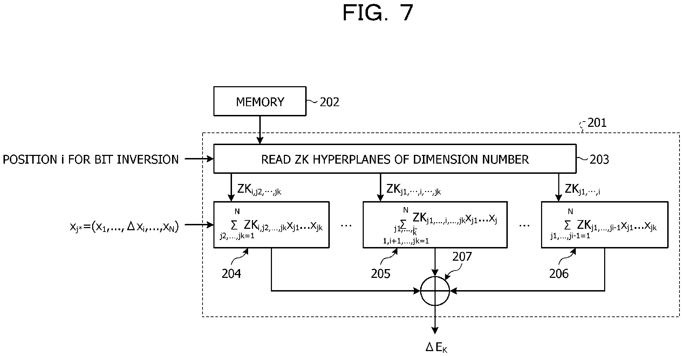

FIG. 7 is a block diagram illustrating an exemplary conventional structure for a minimum solution search. As illustrated in FIG. 7, an arithmetic processing unit 201 reads the coupling coefficient (ZK), which is a parameter to be used for calculation, from a memory 202, and calculates a difference in energy in a state where the i-th bit $x_i$ of x in the term of a certain order K. Each of $j_1$ to $j_k$ may take a value from 1 to N.

The arithmetic processing unit 201 includes a reading unit 203, operation units 204 to 206, and an addition unit 207. The arithmetic processing unit 201 determines a position (i) for bit inversion, inputs a vector (x) including a difference value $\Delta x_i$ of $x_i$ before and after the inversion, reads a predetermined part from the K-th order coupling coefficient ZK stored in the memory 202, and outputs the energy difference ΔEk of the term.

For a certain dimension of the multidimensional array Z, the reading unit 203 selects a hyperplane in which the position (i) of x for the bit inversion is fixed for each dimension, and reads it from the memory 202 to prepare K pieces. This reading from the memory 202 is the location where the transfer load to the arithmetic processing unit 201, which is the computational resource, is generated.

The operation units 204 to 206 and the addition unit 207 perform a product-sum operation for each hyperplane output from the reading unit 203. For example, in a case where K = 3, the operation in the operation unit 204 is as follows.

[Math. 5]

$$\sum_{j2,j3}^{N} Z_{i,j2,j3} \Delta x_i x_{j2} x_{j3}$$

The addition unit 207 adds up the calculation results of the operation units 204 to 206 to output $\Delta Ek$.

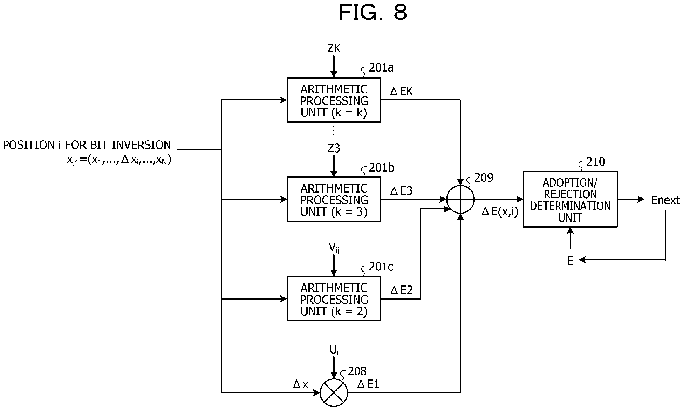

FIG. 8 is an explanatory diagram illustrating an exemplary conventional operation for the minimum solution search. In FIG. 8, it is assumed that an initial value of E is calculated in advance according to the formula (2). It is assumed that the initial value is not included in the transfer amount as it is the first time.

As illustrated in FIG. 8, arithmetic processing units 201a to 201c correspond to the arithmetic processing unit 201 of FIG. 7, and perform the operation of the case where the order is K, 3, or 2. In the case of the first-order, the multiplication unit 208 multiplies a value ($U_i$) of U at the changed position (i) by $\Delta x_i$.

After the operations by the arithmetic processing units 201a to 201c and the multiplication unit 208, the addition unit 209 adds up the respective results to create $\Delta E$ (x, i). An adoption/rejection determination unit 210 determines adoption/rejection of the bit changed according to the publicly known metropolis standard or the like based on $\Delta E$ (x, i). The adoption/rejection determination unit 210 sets Enext = E + $\Delta E$ (x, i) for the current energy E in the case of adoption, and sets Enext = E in the case of rejection.

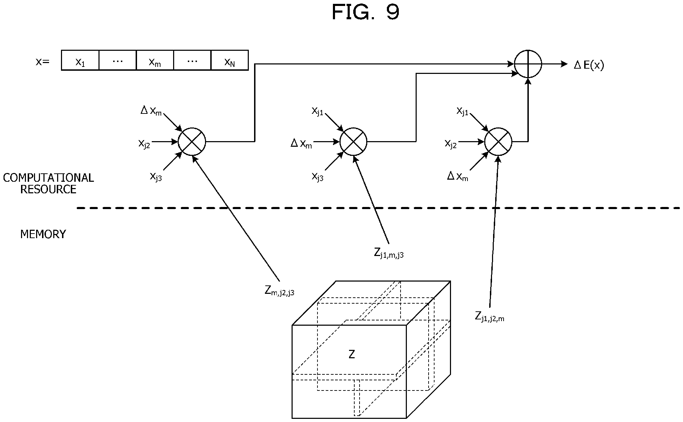

FIG. 9 is an explanatory diagram illustrating an example of reading a hyperplane from the memory. In the example of FIG. 9, the third-order term is picked up. As illustrated in FIG. 9, in order to calculate a difference in the energy using a computational resource (arithmetic processing unit 201, etc.) based on bit inversion, hyperplanes of the order number are read from a memory (memory 202, etc.).

For example, in a case where the order K = 3 and the number of bits is N, the number of $3N^2$ elements is transferred from the memory to the computational resource. Accordingly, in a case of searching for the minimum value of the energy function E(x) including a higher-order term, the transfer amount increases, and the transfer time may be long. In a case where the order is fourth or higher and N is larger, the transfer amount further increases, and the transfer time increases.

In one aspect, it aims to provide an optimization apparatus, an optimization program, and an optimization method capable of suppressing a data transfer amount at a time of an optimization operation.

[Solution to Problem]

The present invention is defined by the independent claims. Preferred embodiments of the invention are defined by the dependent claims. Further examples are provided for facilitating the understanding of the invention.

[Advantageous Effects of Invention]

It becomes possible to suppress the data transfer amount at the time of the optimization operation.

[BRIEF Description of Drawings]

FIG. 1 is a block diagram illustrating an exemplary structure of an information processing apparatus according to an embodiment;
FIG. 2 is a block diagram illustrating an exemplary structure of a minimum solution search unit;
FIG. 3 is a flowchart illustrating an exemplary operation of the information processing apparatus according to the embodiment;
FIG. 4 is an explanatory diagram illustrating an exemplary parameter;
FIG. 5 is an explanatory diagram illustrating a comparative example of a time chart;
FIG. 6 is an explanatory diagram illustrating a transfer amount of a coupling coefficient per one time;
FIG. 7 is a block diagram illustrating an exemplary conventional structure for a minimum solution search;
FIG. 8 is an explanatory diagram illustrating an exemplary conventional operation for the minimum solution search; and
FIG. 9 is an explanatory diagram illustrating an example of reading a hyperplane from a memory.

[Description of Embodiments]

Hereinafter, an optimization apparatus, an optimization program, and an optimization method according to embodiments will be described with reference to the drawings. Configurations with the same functions in the embodiments are denoted by the same reference signs, and redundant descriptions will be omitted. Note that the optimization apparatus, the optimization program, and the optimization method to be described in the embodiments below are merely examples, and do not limit the embodiments. Furthermore, the embodiments below may be appropriately combined unless otherwise contradicted.

In an embodiment, an information processing apparatus that performs various kinds of arithmetic processing is exemplified as an example of the optimization apparatus. In this information processing apparatus, in the simulated annealing using an Ising-type energy function, adoption/rejection of bit inversion is selected based on a difference in the energy function accompanying the bit inversion to perform optimization as one arithmetic processing. Specifically, for example, the information processing apparatus stochastically inverts one or more bits and calculates an energy change in a case where the bits are inverted, and adopts whether or not to accept the bit inversion according to the energy change, thereby searching for an optimum solution that minimizes the energy. Note that, the embodiment is not limited to the case of using the Ising model to solve the optimization problem, and is also applicable to a case of using a model including a higher-order term of a third-order or higher to solve the optimization problem.

The information processing apparatus according to the embodiment uses the Monte Carlo method in which one or more bits are randomly inverted to search for the optimum solution to obtain a state x, which is the minimum energy of an energy function (E). Here, a change amount(difference) of the energy function (E) from the energy before inversion due to the inversion of an i-th bit, which is a candidate for the inversion, is set to $\Delta E_i$. The information processing apparatus according to the embodiment calculates $\Delta E_i$, and then determines (selects) adoption/rejection of the inversion in the i-th bit using the metropolis standard or the like on the basis of the $\Delta E_i$.

Here, the calculation of $\Delta E_i$ in the information processing apparatus according to the embodiment will be described. First, with respect to the formula (2) mentioned above, the terms of the third-order or higher are enclosed in Z, and it is rewritten as the following formula (5).
[Math. 6]

$$E = -\sum_{k=3}^{K} \sum_{<j_1 \cdots j_k>} ZK_{<j_1 \cdots j_k>} x_{j_1} \cdots x_{j_k} - \sum_{<ij>} V_{ij} x_i x_j - \sum_i U_i x_i + E_0 \qquad \cdots (5)$$

Here, considering an energy difference $\Delta E$ caused by the bit inversion, $E_0$ in the formula (5) is a constant, and thus it is unnecessary. Furthermore, while a variable x is a discrete value and is impossible to be subject to differentiation, a primary difference is set as $\Delta x$ focusing on a difference (primary difference) due to the bit change in the coupled x. With the number of variables of coupled x reduced by one using the $\Delta x$, $\Delta E_i$ becomes as expressed in the following formula (6).
[Math. 7]

$$\Delta E_i = -\sum_{k=3}^{K} \sum_{i \in \{j_1 \cdots j_k\}} Z_{j_1 \cdots j_k} x_{j_1} \cdots x_{i-1} x_{i+1} x_{j_k} \Delta x_i - \sum_j V_{ij} x_i \Delta x_j - U_i \Delta x_i \qquad \cdots (6)$$

Next, in the formula (6), an auxiliary bit (also referred to as auxiliary variable) $y_{i,m}$ that can be calculated from x is introduced. The auxiliary bit $y_{i,m}$ is the product obtained by excluding a variable $x_i$ of the i-th bit to be inverted from the product of all variables x ($x_{j1}$,..., $x_{jk}$). Since y can be calculated from x, the introduction of y does not increase the bit itself. With the auxiliary bit $y_{i,m}$ introduced, the formula (6) can be rewritten as the following formula (7).
[Math. 8]

$$\Delta E_i = -\sum_{k=3}^{K} \sum_{i \in \{j_1 \cdots j_k\}} Z_{j_1, \cdots, j_k} y_{i,m} \Delta x_i - \sum_j V_{ij} x_i \Delta x_j - U_i \Delta x_i \qquad \cdots (7)$$

Here, $Z_{i,m}$ is introduced. $Z_{i,m}$ is a coupling coefficient corresponding to $y_{i,m}$. Accordingly, $\Delta E_i$ can be expressed as in the following formula (8). In the operation of the formula (8), it is possible to reduce the number of elements of Z referenced to by $g_i$ by one order.
[Math. 9]

$$\Delta E_i = -(h_i + g_i)\Delta x_i \left.\begin{array}{l} \\ \\ \end{array}\right\}$$
$$h_i = \sum_j V_{i,j}\, x_j + U_i \quad \cdots (8)$$
$$g_i = \sum_m Z_{i,m} y_{i,m}$$

In a case of adopting bit inversion, there is a possibility that values of a plurality of auxiliary variables $y_{i,m}$ change due to inversion of a variable $x_j$ for energy update. With the change set as $\Delta y_{i,m}$, the energy update is expressed by the following formula (9).

[Math. 10]

$$E(x, t+1) \leftarrow E(x, t) - \big(h_i(t) + g_i(t)\big)\Delta x_i \left.\begin{array}{l} \\ \\ \end{array}\right\}$$
$$h_i(t+1) \leftarrow h_i(t) + V_{i,j}\Delta x_j \quad \cdots (9)$$
$$g_i(t+1) \leftarrow g_i(t) + \sum_m Z_{i,m}\Delta y_{i,m}$$

In the information processing apparatus according to the embodiment, the terms of the third-order or higher in the calculation of $\Delta E_i$ are calculated as in the formulae (8) and (9). Specifically, for example, the information processing apparatus calculates $\Delta E_i$ using the auxiliary variable $y_{i,m}$, which is the product of the variables corresponding to respective bits excluding the variable corresponding to the bit to be a candidate for the inversion and the coupling coefficient $Z_{i,m}$ corresponding to $y_{i,m}$. At this time, the information processing apparatus reads the coupling coefficient $Z_{i,m}$ corresponding to the auxiliary variable from the memory that stores the coupling coefficients corresponding to all the bits related to the energy function. Therefore, the information processing apparatus is enabled to reduce the number of elements to be read from the memory by one order, whereby it becomes possible to suppress the data transfer amount at the time of operation.

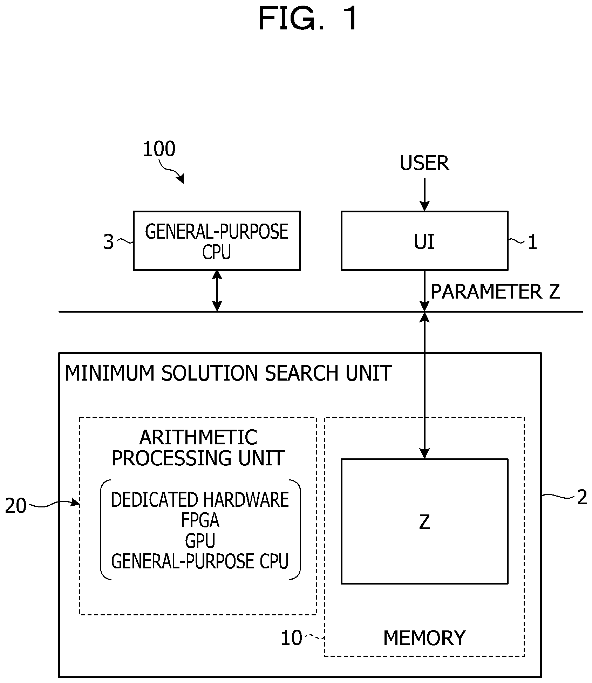

FIG. 1 is a block diagram illustrating an exemplary structure of the information processing apparatus according to the embodiment. As illustrated in FIG. 1, an information processing apparatus 100 includes a UI 1, a minimum solution search unit 2, and a general-purpose central processing unit (CPU) 3, and those respective units are connected by a bus or the like. For example, a personal computer (PC) or the like may be applied as the information processing apparatus 100.

The UI 1 is a user interface (UI) that performs data input from a user, output of processing results, and the like. Parameters given from the outside, such as the coupling coefficient Z corresponding to all the bits related to the energy function and a temperature, are input by the user via the UI 1.

The minimum solution search unit 2 is a processing unit that executes arithmetic processing related to optimization and searches for an optimum solution that minimizes the energy, and includes a memory 10 and an arithmetic processing unit 20. The general-purpose CPU 3 is a general-purpose CPU that handles an application for processing of the UI 1 and the arithmetic processing unit 20, and the like.

The memory 10 is a hard disk drive (HDD), a random access memory (RAM), or the like, which stores parameters such as a coupling coefficient W input via the UI 1.

The arithmetic processing unit 20 is a processing unit that calculates $\Delta E_i$ according to the formulae (8) and (9) and determines, based on the $\Delta E_i$, adoption/rejection of the inversion in the i-th bit using the metropolis standard or the like to search for an optimum solution. A dedicated hardware apparatus such as an application specific integrated circuit (ASIC), a field-programmable gate array (FPGA), a graphics processing unit (GPU), a general-purpose CPU, or the like may be applied to the arithmetic processing unit 20.

For example, the arithmetic processing unit 20 reads and executes a program stored in the memory 10, thereby executing arithmetic processing related to optimization. Note that, the program to be executed by the arithmetic processing unit 20 is not necessarily stored in the memory 10. For example, a program stored in a storage medium that can be read by the information processing apparatus 100 may be read, and the arithmetic processing unit 20 may execute it. The storage medium that can be read by the information processing apparatus 100 corresponds to, for example, a portable recording medium such as a CD-ROM, a DVD disk, or a universal serial bus (USB) memory, a semiconductor memory such as a flash memory, a hard disk drive, or the like. Furthermore, the program may be prestored in an apparatus connected to a public line, the Internet, a LAN, or the like, and the information processing apparatus 100 may read the program from them to execute it. Furthermore, the various processing functions implemented by the arithmetic processing unit 20 may be executed by a plurality of computers in cooperation through cloud computing.

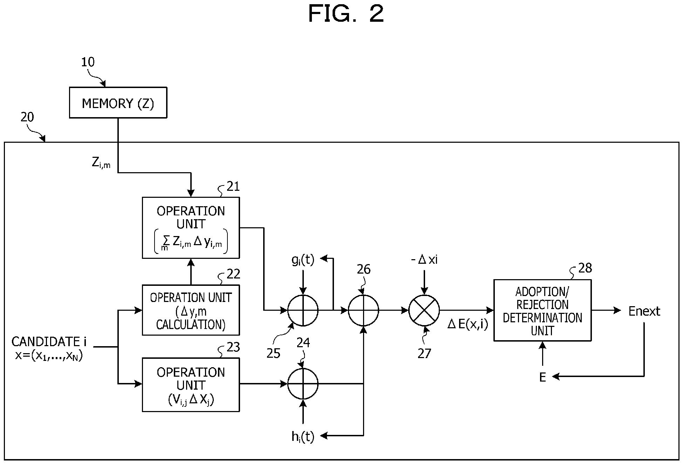

FIG. 2 is a block diagram illustrating an exemplary structure of the arithmetic processing unit 20. As illustrated in FIG. 2, the arithmetic processing unit 20 includes operation units 21, 22, and 23, addition units 24, 25, and 26, a multiplication unit 27, and an adoption/rejection determination unit 28. Note that, in the arithmetic processing unit 20, it is assumed that the initial value of E and the initial values of $h_i$ and $g_i$ are calculated in advance according to the formula (8). In the example illustrated in the drawing, a configuration of the arithmetic processing unit 20 that mainly calculates $\Delta y,m$, calculates $\Delta E$ according to a result thereof, and determines adoption/rejection is exemplified.

The operation unit 21 reads, from the coupling coefficient Z corresponding to all the bits stored in the memory 10, $Z_{i,m}$ excluding the dimension corresponding to the bit to be a candidate for the inversion, and performs operation according to the formula (8).

The operation unit 22 calculates $\Delta y,m$ from the variable x and the candidate bit i to be changed.

The operation unit 23 and the addition unit 24 perform calculation related to $h_i$ according to the formula (8). Note that, whether or not to update $h_i$ depends on the adoption/rejection determination by the adoption/rejection determination unit 28, and $h_i$ is updated in a case where the adoption/rejection determination unit 28 determines adoption.

The addition unit 25 performs calculation related to $g_i$ according to the formula (8) on the basis of the operation result of the operation unit 21. Note that whether or not to update $g_i$ depends on the adoption/rejection determination by the adoption/rejection determination unit 28, and $g_i$ is updated in a case where the adoption/rejection determination unit 28 determines adoption.

The addition unit 26 adds the operation results of the addition units 24 and 25. The multiplication unit 27 multiplies the operation result of the addition unit 26 by $-\Delta x_i$. For example, in the operation of the addition unit 26 and the multiplication unit 27, $\Delta E_i$ is calculated according to the formula (8).

The adoption/rejection determination unit 28 determines adoption/rejection of the bit changed according to the metropolis standard based on $\Delta E (x, i)$, which is the operation result up to the multiplication unit 27.

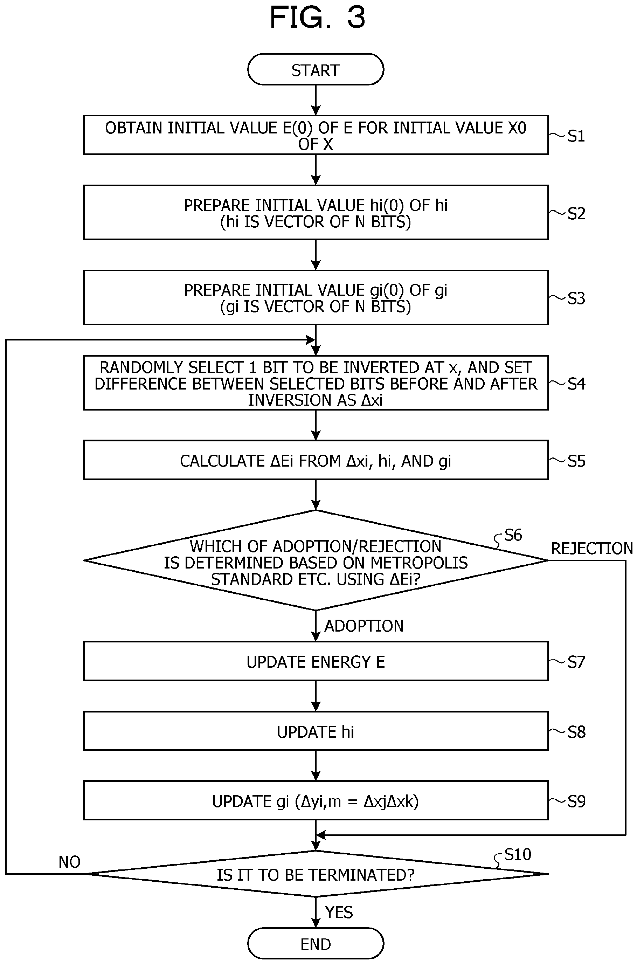

FIG. 3 is a flowchart illustrating an exemplary operation of the information processing apparatus according to the embodiment. Specifically, for example, the flowchart of FIG. 3 illustrates an exemplary operation in a case of obtaining a minimum solution (x) of an energy function having a third-order term.

As illustrated in FIG. 3, when the process starts, the arithmetic processing unit 20 obtains an initial value E(0) of the energy function E for an initial value x0 of x according to the following formula (10) related to the energy function (S1).
[Math. 11]

$$E = -\sum_{i,j,k}^{N} Z_{i,j,k} x_i x_j x_k - \sum_{i,j}^{N} V_{i,j} x_i x_j - \sum_{i}^{N} U_i x_i - C \qquad \cdots (10)$$

Next, the arithmetic processing unit 20 prepares an initial value $h_i(0)$ of $h_i$ according to the following formula (11) (S2). Here, $h_i$ represents a vector of N bits (N: number of bits).
[Math. 12]

$$h_i = \sum_{j} V_{i,j} x_j + U_i \qquad \cdots (11)$$

Next, the arithmetic processing unit 20 prepares an initial value $g_i(0)$ of $g_i$ according to the following formula (12) (S3). Here, $g_i$ represents a vector of N bits.
[Math. 13]

$$g_i = -\sum_{j,k}^{N} Z_{i,j,k} x_j x_k \qquad \cdots (12)$$

Next, the arithmetic processing unit 20 randomly selects 1 bit (i) to be inverted at x, and sets the difference between the selected bits before and after the inversion as $\Delta x_i$ (S4).

Next, the arithmetic processing unit 20 calculates $\Delta E_i$ from $\Delta x_i$, $h_i$, and $g_i$ according to the following formula (13) (S5).

[Math. 14]

$$\Delta E_i = -(h_i + g_i)\Delta x_i \qquad \cdots (13)$$

Next, the adoption/rejection determination unit 28 of the arithmetic processing unit 20 determines, using the calculated $\Delta E_i$, adoption/rejection of bit inversion based on the metropolis standard or the like (S6). For example, in the case of the metropolis standard, the adoption/rejection determination unit 28 generates a uniform random number rand in the section $0 \leqq$ rand $\leqq 1$ as an example. Next, the adoption/rejection determination unit 28 determines that the bit inversion is to be adopted if rand $> \exp (\Delta E \times \beta)$. Here, $\beta$ represents an inverse temperature.

In the case of rejection (rejection in S6), the arithmetic processing unit 20 proceeds to S10 in the process. In the case of adoption (adoption in S6), the arithmetic processing unit 20 updates the energy E according to the following formula (14) (S7). The updated energy E (x, t + 1) is a value obtained by adding E before the update and $\Delta E_i$ of the formula (13), which is the operation result of the multiplication unit 27.

[Math. 15]

$$E(x, t + 1) \leftarrow E(x, t) - \big(h_i(t) + g_i(t)\big)\Delta x_j \qquad \cdots (14)$$

Next, the arithmetic processing unit 20 updates $h_i$ according to the following formula (15) based on the operation of the operation unit 23 and the addition unit 24 (S8).

[Math. 16]

$$h_i(t + 1) \leftarrow h_i(t) + V_{i,j}\Delta x_j \qquad \cdots (15)$$

Next, the arithmetic processing unit 20 updates $g_i$ according to the formula (16) based on the operation of the operation unit 21, the operation unit 22, and the addition unit 25 (S9). Here, $\Delta y,m$ is $\Delta y$, m = $\Delta x_j \Delta x_k$.

[Math. 17]

$$g_i(t + 1) \leftarrow g_i(t) + \sum_m Z_{i,m}\Delta y_{i,m} \qquad \cdots (16)$$

Next, the arithmetic processing unit 20 determines whether or not termination conditions, such as the arithmetic processing of S4 to S9 is repeated a predetermined number of times or predetermined energy is obtained, are satisfied (S10). If the termination conditions are satisfied (Yes in S10), the arithmetic processing unit 20 terminates the process assuming that the optimization has been achieved. If the termination conditions are not satisfied (No in S10), the arithmetic processing unit 20 returns the process to S4. In this manner, the arithmetic processing unit 20 repeats the bit inversion until the predetermined number of times or the predetermined energy is obtained.

As described above, the information processing apparatus 100 performs calculation for the terms of the third-order or higher of the difference accompanying the inversion of the specific bit (i) in the energy function using the auxiliary variable ($y_{i,m}$), which is the product of the variables corresponding to respective bits excluding the variable corresponding to the bit to be a candidate for the inversion and the coupling coefficient ($Z_{i,m}$) corresponding to the auxiliary variable. Then, at the time of this calculation, the information processing apparatus 100 reads the coupling coefficient corresponding to the auxiliary variable from the memory 10 that stores the coupling coefficient (Z) representing the interaction of the plurality of variables corresponding to all of the bits related to the energy function. As a result, the information processing apparatus 100 is enabled to reduce the number of elements to be read from the memory 10 by one order, whereby it becomes possible to suppress the data transfer amount at the time of operation.

Furthermore, in a case of adopting inversion of a specific bit, the information processing apparatus 100 calculates a change in the auxiliary variable due to the inversion of the variable corresponding to the specific bit (S8 and S9). As a result, in the case of adopting inversion of a specific bit, the information processing apparatus 100 is capable of updating the value of the auxiliary variable in accordance with the bit inversion.

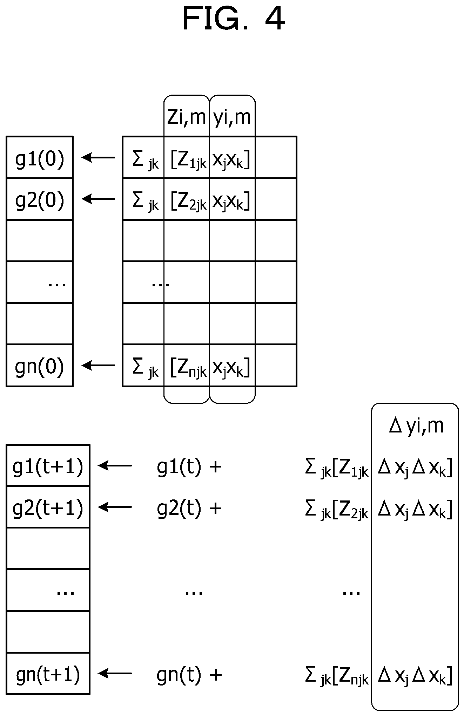

FIG. 4 is an explanatory diagram illustrating an exemplary parameter. Specifically, for example, FIG. 4 exemplifies a third-order case of the parameter $Z_{i,m}$. While $\Delta x_i$ is enclosed in FIG. 4, when $x_i$ changes, $x_j$ and $x_k$ may also change (in the case of pointing to the same bit position). Therefore, as illustrated in FIG. 4, it is sufficient to access the changed part at the time of update. Accordingly, one access to the coupling coefficient (Z) corresponding to all of the bits related to the energy function is not $N_3$, but $N_2$ "at a maximum".

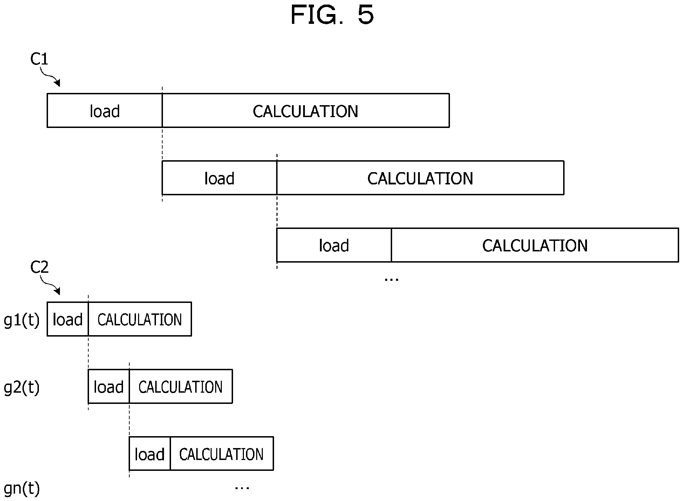

FIG. 5 is an explanatory diagram illustrating a comparative example of a time chart. In FIG. 5, a case C1 is a time chart of arithmetic processing related to a conventional optimum solution search, and a case C2 is a time chart of arithmetic processing related to an optimum solution search according to the embodiment.

As illustrated in FIG. 5, in the conventional case C1, processing for calculation of $\Delta E$ is carried out after transferring the coupling coefficient (Z) at least in hyperplane units. On the other hand, in the case C2 of the embodiment, it is possible to independently transfer and process each of g1(t) to gn(t). The number of bits > the order in most cases, whereby the number of coupling coefficients to be transferred at one time is larger in the conventional case C1 than in the case C2 of the embodiment. Therefore, the total time related to data loading is shorter in the case C2.

In the conventional optimum solution search, the data transfer amount from the memory to the computational resource associated with 1-bit inversion is $kN^{(k-1)}$, where the number of spins (number of bits) is N and the order is k, for each calculation of a difference in the energy. In the optimum solution search according to the present embodiment, $N^{(k-1)}$ or less may be set for one calculation of the difference in the energy.

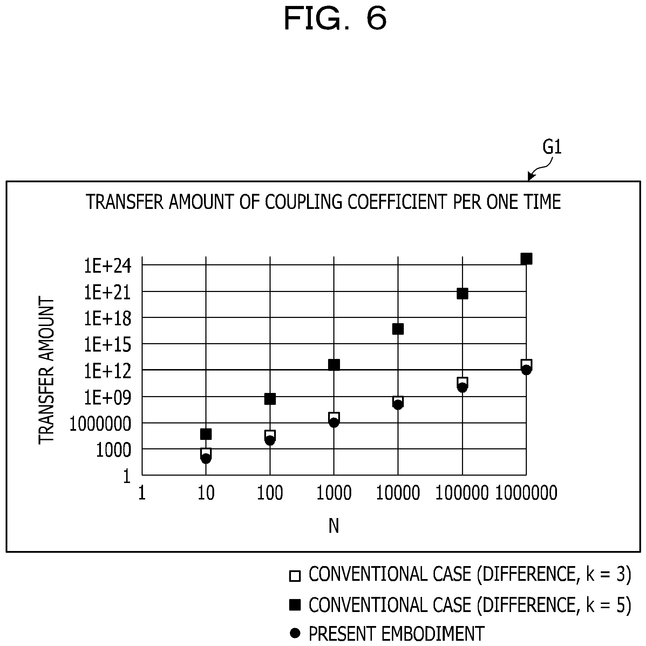

FIG. 6 is an explanatory diagram illustrating a transfer amount of a coupling coefficient per one time. A relationship between N and k and the data transfer amount is as illustrated in a graph G1 of FIG. 6, and it is possible to suppress the data transfer amount according to the optimum solution search in the present embodiment as compared with the conventional case. Furthermore, while the data transfer amount increases as k increases in the conventional optimum solution search, in the present embodiment, the method of using the auxiliary variable is recursively applied, whereby it becomes possible to set the number of elements of the coupling coefficient to be transferred to be similar as in the case of k = 3. Therefore, in the present embodiment, the effect of suppressing the data transfer amount is further enhanced as k increases. For example, in a case where the satisfiability problem (SAT) is applied to the Ising model to perform the optimum solution search, k increases, whereby the effect of suppressing the data transfer amount becomes more remarkable.

**Claims**

1. An optimization apparatus comprising:

    a memory configured to store one or more coupling coefficients that represent interaction of a plurality of variables corresponding to a plurality of bits included in an energy function; and
    an operation unit configured to select, based on a difference of a value of the energy function associated with inversion of a value of each of the plurality of bits, adoption or rejection of bit inversion to perform optimization, wherein
    the operation unit is further configured to:

    specify a coupling coefficient corresponding to an auxiliary variable from the one or more coupling coefficients stored in the memory, the auxiliary variable being a product of variables corresponding to respective bits from which a variable corresponding to a specific bit in the energy function is excluded, and
    execute calculation of a term of a third-order or higher of a difference of a value of the energy function associated with inversion of the specific bit using the auxiliary variable and the coupling coefficient.

2. The optimization apparatus according to claim 1, wherein
the operation unit specifies a change amount of the auxiliary variable due to inversion of the specific bit when inversion of the specific bit is adopted

3. The optimization apparatus according to claim 2, wherein
the operation unit updates the auxiliary variable based on the change amount of the auxiliary variable.

4. An optimization program in which a computer that selects, based on a difference of a value of an energy function associated with inversion of a value of each of a plurality of bits included in the energy function, adoption or rejection of bit inversion to perform optimization and performs processing of:

    specifying a coupling coefficient corresponding to an auxiliary variable from one or more coupling coefficients stored in a memory included in the optimization apparatus, the auxiliary variable being a product of variables corresponding to respective bits from which a variable corresponding to a specific bit in the energy function is excluded, the one or more coupling coefficients representing interaction of a plurality of variables corresponding to the plurality of bits; and

executing calculation of a term of a third-order or higher of a difference of a value of the energy function associated with inversion of the specific bit using the auxiliary variable and the coupling coefficient.

**5.** The optimization program according to claim 4, the processing further includes specifying a change amount of the auxiliary variable due to inversion of the specific bit when inversion of the specific bit is adopted.

**6.** An optimization method performed by an optimization apparatus that selects, based on a difference of a value of an energy function associated with inversion of a value of each of a plurality of bits included in the energy function, adoption or rejection of bit inversion to perform optimization, the optimization method comprising:

specifying a coupling coefficient corresponding to an auxiliary variable from one or more coupling coefficients stored in a memory included in the optimization apparatus, the auxiliary variable being a product of variables corresponding to respective bits from which a variable corresponding to a specific bit in the energy function is excluded, the one or more coupling coefficients representing interaction of a plurality of variables corresponding to the plurality of bits; and

executing calculation of a term of a third-order or higher of a difference of a value of the energy function associated with inversion of the specific bit using the auxiliary variable and the coupling coefficient.

**7.** The optimization method according to claim 6, further comprising:
specifying a change amount of the auxiliary variable due to inversion of the specific bit when inversion of the specific bit is adopted.

**Patentansprüche**

**1.** Optimierungsvorrichtung, umfassend:

einen Speicher, der konfiguriert ist, um einen oder mehrere Kopplungskoeffizienten zu speichern, die eine Wechselwirkung einer Vielzahl von Variablen repräsentieren, die einer Vielzahl von Bits entsprechen, die in eine Energiefunktion eingeschlossen sind; und
eine Betriebseinheit, die konfiguriert ist, um basierend auf einer Differenz eines Wertes der Energiefunktion, der mit einer Inversion eines Wertes von jedem der Vielzahl von Bits assoziiert ist, eine Annahme oder Ablehnung der Bitinversion auszuwählen, um eine Optimierung durchzuführen, wobei
die Betriebseinheit weiter konfiguriert ist, um:

einen Kopplungskoeffizienten, der einer Hilfsvariable entspricht, aus dem einen oder den mehreren Kopplungskoeffizienten zu spezifizieren, die im Speicher gespeichert sind, wobei die Hilfsvariable ein Produkt von Variablen ist, die jeweiligen Bits entsprechen, von denen eine Variable, die einem spezifischen Bit in der Energiefunktion entspricht ausgeschlossen ist, und
eine Berechnung eines Terms einer dritten oder höheren Ordnung einer Differenz eines Wertes der Energiefunktion auszuführen, die mit der Inversion des spezifischen Bits assoziiert ist, unter Verwendung der Hilfsvariable und des Kopplungskoeffizienten.

**2.** Optimierungsvorrichtung nach Anspruch 1, wobei
die Betriebseinheit einen Änderungsbetrag der Hilfsvariable aufgrund der Inversion des spezifischen Bits spezifiziert, wenn die Inversion des spezifischen Bits angenommen wird

**3.** Optimierungsvorrichtung nach Anspruch 2, wobei
die Betriebseinheit die Hilfsvariable basierend auf dem Änderungsbetrag der Hilfsvariable aktualisiert.

**4.** Optimierungsprogramm, bei dem ein Computer, der basierend auf einer Differenz eines Wertes einer Energiefunktion, die mit einer Inversion eines Wertes jedes aus einer Vielzahl von Bits, die in die Energiefunktion eingeschlossen sind, assoziiert ist, eine Annahme oder Ablehnung einer Bitinversion auswählt, um eine Optimierung durchzuführen, und die das Verarbeiten von Folgendem durchführt:

Spezifizieren eines Kopplungskoeffizienten, der einer Hilfsvariable entspricht, aus einem oder mehreren Kopplungskoeffizienten, die in einem Speicher gespeichert sind, der in der Optimierungsvorrichtung eingeschlossen ist, wobei die Hilfsvariable ein Produkt von Variablen ist, die jeweiligen Bits entsprechen, von denen eine Variable, die einem spezifischen Bit in der Energiefunktion entspricht, ausgeschlossen ist, wobei der eine oder die mehreren Kopplungskoeffizienten die Wechselwirkung einer Vielzahl von Variablen repräsentieren, die der Vielzahl von Bits entsprechen; und

Ausführen einer Berechnung eines Terms einer dritten oder höheren Ordnung einer Differenz eines Wertes der Energiefunktion, die mit der Inversion des spezifischen Bits assoziiert ist, unter Verwendung der Hilfsvariable und des Kopplungskoeffizienten.

**5.** Optimierungsprogramm nach Anspruch 4, wobei das Verarbeiten weiter das Spezifizieren eines Änderungsbetrags der Hilfsvariable aufgrund der Inversion des spezifischen Bits einschließt, wenn die Inversion des spezifischen Bits angenommen wird.

**6.** Optimierungsverfahren, das von einer Optimierungsvorrichtung durchgeführt wird, die basierend auf einer Differenz eines Wertes einer Energiefunktion, die mit einer Inversion eines Wertes jedes aus einer Vielzahl von Bits, die in die Energiefunktion eingeschlossen sind, assoziiert ist, eine Annahme oder Ablehnung einer Bitinversion auswählt, um eine Optimierung durchzuführen, wobei das Optimierungsverfahren folgendes umfasst:

Spezifizieren eines Kopplungskoeffizienten, der einer Hilfsvariable entspricht, aus einem oder mehreren Kopplungskoeffizienten, die in einem Speicher gespeichert sind, der in der Optimierungsvorrichtung eingeschlossen ist, wobei die Hilfsvariable ein Produkt von Variablen ist, die jeweiligen Bits entsprechen, von denen eine Variable, die einem spezifischen Bit in der Energiefunktion entspricht, ausgeschlossen ist, wobei der eine oder die mehreren Kopplungskoeffizienten die Wechselwirkung einer Vielzahl von Variablen repräsentieren, die der Vielzahl von Bits entsprechen; und

Ausführen einer Berechnung eines Terms einer dritten oder höheren Ordnung einer Differenz eines Wertes der Energiefunktion, die mit der Inversion des spezifischen Bits assoziiert ist, unter Verwendung der Hilfsvariable und des Kopplungskoeffizienten.

**7.** Optimierungsverfahren nach Anspruch 6, weiter umfassend:
Spezifizieren eines Änderungsbetrags der Hilfsvariable aufgrund der Inversion des spezifischen Bits, wenn die Inversion des spezifischen Bits angenommen wird.

## Revendications

**1.** Appareil d'optimisation comprenant :

une mémoire configurée pour stocker un ou plusieurs coefficients de couplage qui représentent une interaction d'une pluralité de variables correspondant à une pluralité de bits inclus dans une fonction d'énergie ; et
une unité de fonctionnement configurée pour sélectionner, sur base d'une différence d'une valeur de la fonction d'énergie associée à l'inversion d'une valeur de chaque bit de la pluralité de bits, l'adoption ou le rejet de l'inversion de bit pour mettre en oeuvre une optimisation, dans lequel
l'unité de fonctionnement est en outre configurée pour :

spécifier un coefficient de couplage correspondant à une variable auxiliaire parmi les un ou plusieurs coefficients de couplage stockés dans la mémoire, la variable auxiliaire étant un produit de variables correspondant à des bits respectifs dont une variable correspondant à un bit spécifique dans la fonction d'énergie est exclue, et
exécuter un calcul d'un terme d'un troisième ordre ou supérieur d'une différence d'une valeur de la fonction d'énergie associée à l'inversion du bit spécifique en utilisant la variable auxiliaire et du coefficient de couplage.

**2.** Appareil d'optimisation selon la revendication 1, dans lequel
l'unité de fonctionnement spécifie une quantité de changement de la variable auxiliaire due à l'inversion du bit spécifique lorsque l'inversion du bit spécifique est adoptée

**3.** Appareil d'optimisation selon la revendication 2, dans lequel l'unité de fonctionnement met à jour la variable auxiliaire sur base de la quantité de changement de la variable auxiliaire.

4. Programme d'optimisation dans lequel un ordinateur qui sélectionne, sur base d'une différence d'une valeur d'une fonction d'énergie associée à l'inversion d'une valeur de chaque bit d'une pluralité de bits inclus dans la fonction d'énergie, l'adoption ou le rejet de l'inversion de bit pour réaliser une optimisation et réalise le traitement consistant à :

spécifier un coefficient de couplage correspondant à une variable auxiliaire à partir d'un ou plusieurs coefficients de couplage stockés dans une mémoire incluse dans l'appareil d'optimisation, la variable auxiliaire étant un produit de variables correspondant à des bits respectifs dont une variable correspondant à un bit spécifique dans la fonction d'énergie est exclue, les un ou plusieurs coefficients de couplage représentant une interaction d'une pluralité de variables correspondant à la pluralité de bits ; et
exécuter un calcul d'un terme d'un troisième ordre ou supérieur d'une différence d'une valeur de la fonction d'énergie associée à l'inversion du bit spécifique en utilisant la variable auxiliaire et du coefficient de couplage.

5. Programme d'optimisation selon la revendication 4, le traitement inclut en outre à spécifier une quantité de changement de la variable auxiliaire due à l'inversion du bit spécifique lorsque l'inversion du bit spécifique est adoptée.

6. Procédé d'optimisation mis en oeuvre par un appareil d'optimisation qui sélectionne, sur base d'une différence d'une valeur d'une fonction d'énergie associée à une inversion d'une valeur de chaque bit d'une pluralité de bits inclus dans la fonction d'énergie, l'adoption ou le rejet de l'inversion de bit pour mettre en oeuvre une optimisation, le procédé d'optimisation comprenant :

spécifier un coefficient de couplage correspondant à une variable auxiliaire à partir d'un ou de plusieurs coefficients de couplage stockés dans une mémoire incluse dans l'appareil d'optimisation, la variable auxiliaire étant un produit de variables correspondant à des bits respectifs dont une variable correspondant à un bit spécifique dans la fonction d'énergie est exclue, les un ou plusieurs coefficients de couplage représentant une interaction d'une pluralité de variables correspondant à la pluralité de bits ; et
exécuter un calcul d'un terme d'un troisième ordre ou supérieur d'une différence d'une valeur de la fonction d'énergie associée à l'inversion du bit spécifique en utilisant la variable auxiliaire et du coefficient de couplage.

7. Procédé d'optimisation selon la revendication 6, comprenant en outre :
la spécification d'une quantité de changement de la variable auxiliaire due à l'inversion du bit spécifique lorsque l'inversion du bit spécifique est adoptée.

# FIG. 1

100

USER

3 — GENERAL-PURPOSE CPU

UI — 1

PARAMETER Z

MINIMUM SOLUTION SEARCH UNIT

ARITHMETIC PROCESSING UNIT

DEDICATED HARDWARE
FPGA
GPU
GENERAL-PURPOSE CPU

20

Z

2

10

MEMORY

# FIG. 2

# FIG. 3

START

OBTAIN INITIAL VALUE E(0) OF E FOR INITIAL VALUE X0 OF X ~S1

PREPARE INITIAL VALUE hi(0) OF hi (hi IS VECTOR OF N BITS) ~S2

PREPARE INITIAL VALUE gi(0) OF gi (gi IS VECTOR OF N BITS) ~S3

RANDOMLY SELECT 1 BIT TO BE INVERTED AT x, AND SET DIFFERENCE BETWEEN SELECTED BITS BEFORE AND AFTER INVERSION AS Δxi ~S4

CALCULATE ΔEi FROM Δxi, hi, AND gi ~S5

WHICH OF ADOPTION/REJECTION IS DETERMINED BASED ON METROPOLIS STANDARD ETC. USING ΔEi? S6    REJECTION

ADOPTION

UPDATE ENERGY E ~S7

UPDATE hi ~S8

UPDATE gi (Δyi,m = ΔxjΔxk) ~S9

NO    IS IT TO BE TERMINATED? S10

YES

END

# FIG. 4

|  | $Z_{i,m}$ | $y_{i,m}$ |  |
|---|---|---|---|
| $g1(0)$ ← | $\Sigma_{jk}$ | $[Z_{1jk}$ | $x_j x_k]$ |  |
| $g2(0)$ ← | $\Sigma_{jk}$ | $[Z_{2jk}$ | $x_j x_k]$ |  |
|  |  |  |  |
| ... | ... |  |  |
|  |  |  |  |
| $gn(0)$ ← | $\Sigma_{jk}$ | $[Z_{njk}$ | $x_j x_k]$ |  |

|  |  |  | $\Delta y_{i,m}$ |
|---|---|---|---|
| $g1(t+1)$ ← | $g1(t) +$ | $\Sigma_{jk}[Z_{1jk}$ | $\Delta x_j \Delta x_k]$ |
| $g2(t+1)$ ← | $g2(t) +$ | $\Sigma_{jk}[Z_{2jk}$ | $\Delta x_j \Delta x_k]$ |
|  |  |  |  |
| ... | ... | ... |  |
|  |  |  |  |
| $gn(t+1)$ ← | $gn(t) +$ | $\Sigma_{jk}[Z_{njk}$ | $\Delta x_j \Delta x_k]$ |

# FIG. 5

C1

| load | CALCULATION |
|---|---|

| load | CALCULATION |
|---|---|

| load | CALCULATION |
|---|---|

...

C2

g1(t)

| load | CALCULATION |
|---|---|

g2(t)

| load | CALCULATION |
|---|---|

| load | CALCULATION |
|---|---|

gn(t)

...

# FIG. 6

G1

TRANSFER AMOUNT OF COUPLING COEFFICIENT PER ONE TIME

□ CONVENTIONAL CASE (DIFFERENCE, k = 3)
■ CONVENTIONAL CASE (DIFFERENCE, k = 5)
● PRESENT EMBODIMENT

# FIG. 7

# FIG. 8

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019145010 A
- JP 2019046038 A
- WO 2015190593 A
- US 20190087388
- US 20170364477 A1